# EUROPEAN PATENT APPLICATION

(11) **EP 1 932 797 A1**
(43) Date of publication of application: **18.06.2008**
(21) Application number: 07150021.9
(22) Date of filing: 14.12.2007
(51) Int. Cl.: B66F 7/20, B62D 33/07, F15B 11/044, F15B 11/16

(54) **Lifting apparatus**

(30) Priority: 15.12.2006 IT MO20060408
(71) Applicant: Ognibene S.p.A., 42100 Mancasale di Reggio Emilia (IT)
(72) Inventor: Ognibene, Claudio, 42100 Reggio Emilia (IT)
(74) Representative: Crugnola, Pietro

(57) **Abstract**

An apparatus for lifting a load, in particular a cab of a vehicle, comprises double-acting cylinder means (3), provided with piston means (5) connected to said load and defining first chamber means (9) and second chamber means (10) flowingly connected to supply means (11) or with tank means (13) of a fluid respectively by first conduit means (19, 21) and second conduit means (20, 22), control valve means (17) for connecting said supply means (11) of said pressurised fluid selectively to said first chamber means (9) or to said second chamber means (10) respectively for lifting or lowering said load, and sequence valve means (23) mounted on said first conduit means (19, 21) between said control valve means (17) and said double-acting cylinder means (3) and configured so as to enable said fluid to flows towards said control valve means (17) when a fixed pressure of said fluid in said first conduit means (19, 21) is reached.

## Description

The invention relates to a lifting apparatus, in particular a hydraulic apparatus arranged for lifting and tilting cabs of vehicles, for example trucks.

Lifting such cabs of vehicles is necessary to enable the vehicles to be maintained, for example in the case of trucks, to be able to access the motor of the vehicle.

Hydraulic tilting apparatuses are known for cabs of vehicles comprising a first and a second double-acting cylinder and a pump, which is connected to a delivery conduit and to a tank of a hydraulic fluid, the pump being arranged for supplying a first chamber and a second chamber of each cylinder with the pressurised hydraulic fluid.

In particular, when the hydraulic fluid is pumped inside the first chamber of each cylinder, by a lifting connection, respective pistons of the cylinders move the cab upward to enable the cab to be tilted. On the other hand, when the hydraulic fluid is pumped inside the second chamber of each cylinder, by a lowering connection, the pistons of the cylinders move the cab downward.

A control valve connects the pump selectively to the lifting connection or to the lowering connection.

For each cylinder there is provided, between the control valve and the lifting connection, a corresponding check or nonreturn valve, piloted by a pressure signal derived from the lowering connection by a piloting line. The piloted check valve enables the free passage of the pressurised fluid in the direction of the cylinder and closes the flow in the direction of the control valve in the absence of the piloting signal.

The check valves are provided for the sake of safety to avoid the accidental descent of the cab in the event of a malfunction of the pump or breakage of the circuit downstream. For example, if the cab is tilted, when the pump is switched off or has a malfunction, the cab remains locked in a lifted position inasmuch as the flow of the fluid from the first chambers in the direction of the control valve is not permitted.

Nevertheless, it is possible that also the check valves may have a malfunction or break. In order to increase further the degree of safety, apparatuses are known that provide a second common check valve arranged in series between the check valves of the cylinders and the control valve.

These apparatuses nevertheless have the drawback of not enabling simultaneous opening of the check valves arranged at each cylinder. The non-simultaneous opening of such check valves causes differentiated movement of the cylinders and, thus, a non-leveled descent of the cab.

The non-leveled descent of the cab may be dangerous because it may generate an undesired deformation in the structure of the cab.

In order to enable the check valves of the cylinders to open simultaneously, a hydraulic apparatus is known comprising a common check valve, arranged between the check valves and the control valve and piloted by a respective pressure signal provided by a piloting line and derived from the delivery line.

The further check valve is configured so as to enable the passage of the hydraulic fluid, for the lowering of the cab, only for the value of the pressure signal that is greater than that which enables the check valves of the cylinders to be opened. In this way, at the opening of the common check valve, the pistons of the cylinders, connected to the cab, start to move simultaneously downward.

A drawback of such known circuits is that, although the initial instant of a descent stroke of the pistons is substantially the same, non-leveled descents of the cab may occur.

This may be due to a plurality of factors, for example imprecisions in the mounting of the cab, friction and resistance in rotation hinges by means of which the cab is connected to the frame of the vehicle, slight misalignments of these hinges or unbalanced distribution of the weight of the cab with respect to the cylinders. Due to these factors, during the descent stroke, the two pistons may have to overcome different sliding resistance and therefore, even if the cylinders are supplied by fluid at the same pressure, they may move at different descent speeds. In this manner, during descent of the cab progressive misalignment of the pistons of the cylinders and consequent deformation of the cab occur.

This deformation is undesired both for structural reasons and because it may prevent a correct return of the cab to a lowered configuration, in which the vehicle can be used, causing, for example, locking of the cab in intermediate positions.

Known hydraulic apparatuses are thus subject to drawbacks that may cause structural damage to the cab and frame or may require the intervention of specialised personnel, with corresponding loss of time and intervention cost.

An object of the invention is to improve known lifting apparatuses for cabs of vehicles.

Another object of the invention is to make an apparatus provided with hydraulic cylinders for moving the cab that are able to move at the same translation speeds during a descent of the cab so as to allow leveled and uniform lowering of said cab.

A further object is to obtain a lifting apparatus that has a simple and economic construction and is at the same time rugged, safe and reliable.

According to the invention there is provided an apparatus for lifting a load, in particular a cab of a vehicle, comprising double-acting cylinder means, provided with piston means connected to said load and defining first chamber means and second chamber means flowingly connected to supply means or to tank means of a fluid respectively by first conduit means and second conduit means, control valve means for connecting said supply means of said pressurised fluid selectively to said first chamber means or to said second chamber means respectively for lifting or lowering said load, characterised in that it comprises sequence valve means mounted on said first conduit means between said control valve means and said double-acting cylinder means and configured so as to enable said fluid to flows towards said control valve means when a fixed pressure of said fluid in said first conduit means is reached.

In order to lower the load from an initial situation in which the load is lifted, for example to lower the cab when the cab is tilted, the supply means is driven and connected by the control valve means to the second conduit means. In this way, the pressure of the fluid contained in the second chamber means increases, and, as the sequence valve means stops, at least initially, the flow of the fluid contained in the first chamber means towards the control valve means, also the pressure of the fluid contained in said first chamber means increases.

The pressure of the fluid contained in the first chamber means is substantially the same as that of the fluid contained in the first conduit means. When the pressure of the fluid contained in the first chambers reaches a preset value, the sequence valve means opens to allow the fluid to pass through. The pressure of the fluid contained in the first chamber means falls, whilst the pressure of the fluid contained in the second chamber means exerts a thrusting force on the piston. The cab is mechanically connected to the pistons so that a movement of the pistons corresponds to a movement of the cab.

The pressure of the fluid in the first conduit means may fall, nevertheless remaining greater than said fixed pressure, so as to maintain the sequence valve means open.

The fall in the pressure of the fluid contained in the first chamber means and the corresponding fall in the pressure of the fluid contained in the first conduit means may also cause the closing of the sequence valve means. During a load descent step, the sequence valve means may thus open and close alternatively in short time intervals.

The value of the pressure of the fluid contained in the second chamber means at the moment of opening of the sequence valve means is determined by the preset value of the pressure. Advantageously, this fixed pressure is chosen so as to be very high, so as to reach high values of the pressure of the fluid contained in the second chamber means. The thrusting force generated in each double-acting cylinder moves the respective piston with a corresponding sliding speed. The thrusting force that moves each piston is substantially the same for each double-acting cylinder.

Making high pressure values of the fluid in the second chamber means causes thrusting forces that are much greater than possible undesired resistant forces that may be generated during lowering of the cab and which may cause resistance to the sliding of each piston in the corresponding cylinder.

These resistant forces are generally different for each double-acting cylinder, so that each piston is subject to different sliding resistance. The resistant forces are generally determined by a plurality of factors, such as, for example, in the case of a cab, imprecisions in mounting the cab, friction and resistance in rotation hinges by means of which the cab is connected to a frame of the vehicle, slight misalignments of these hinges, unbalanced weight distribution as compared with double-acting cylinders, etc.

As the intensity of the thrusting force acting on each piston is much greater than the intensity of the resistant forces acting on the piston, the sliding speed with which each piston moves inside the respective cylinder is not substantially affected by said resistant forces. Owing to the apparatus according to the invention, all the pistons therefore move substantially at the same speed and during the load-descent step progressive misalignments of the cylinders and consequent non-leveled descents of the load do not occur. For example, the cab can thus return correctly to a lowered configuration in which the vehicle can be used, without locking of the cab in intermediate positions or undesired deformations occurring.

The invention can be better understood and carried into effect with reference to the attached drawing, in which an embodiment of the invention is shown by way of non-limiting example, in which:

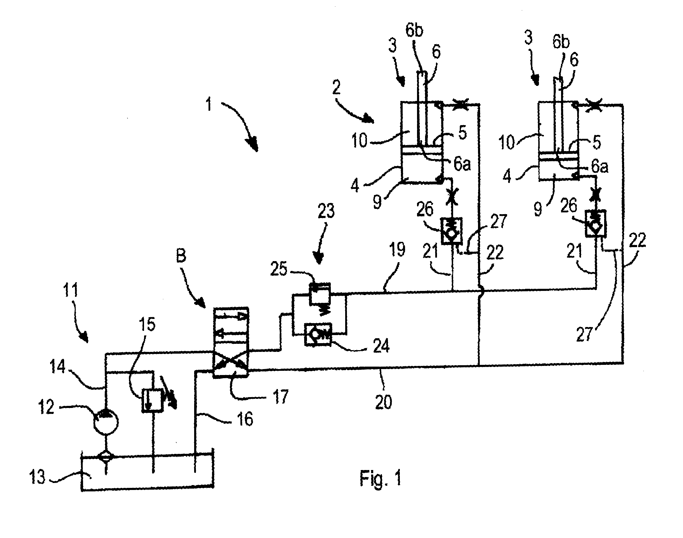

Figure 1 is a schematic view of a lifting apparatus of the invention.

With reference to Figure 1, there is shown a lifting apparatus 1 comprising lifting means 2 arranged for enabling a load to be lifted, in particular a cab, which is not shown, of a vehicle, for example a truck. The lifting or tilting of the cab occurs whenever it is necessary to intervene, for example for maintenance operations, on an engine of the vehicle, which is generally located underneath the cab.

The lifting means 2 comprises at least a pair of double-acting hydraulic cylinders 3 suitable for lifting the cab and supplied with a pressurised operating fluid, typically oil.

Each double-acting hydraulic cylinder 3 is provided with a cylinder 4 inside which slides a piston 5 to which there is fixed an end 6a of a stem 6. A further end 6b of the stem 6 is rotatably connected to the cab. The cylinder 4 is rotatably connected to a frame of the vehicle.

The cab is rotatably connected to the frame so as to be tilted when the double-acting hydraulic cylinders 3 are driven so as to push the stems 6 outside the cylinders 4.

Each double-acting hydraulic cylinder 3 comprises a first chamber 9 and a second chamber 10 bounded by the cylinder 4 and separated from one another by the piston 5.

The hydraulic lifting apparatus 1 further comprises supply means 11 arranged for supplying the double-acting hydraulic cylinders 3 with the pressurised fluid.

The supply means 11 comprises a pump 12 arranged for sucking the operating fluid from a tank 13, pressurising the operating fluid and sending the operating fluid through a delivery conduit 14 to control means 17.

A safety valve 15 is connected to the delivery conduit 16, the safety valve 15 being arranged for discharging into the tank 13 the fluid contained in the delivery conduit 14 if this delivery conduit 14 is at greater pressure than maximum permitted pressure.

There is further provided a discharging conduit 16 arranged for discharging into the tank 13 the operating fluid discharged from the control means 17.

The control means 17 comprises a two-position two-way control valve, which in a first operating position connects the delivery conduit 14 to a first supply conduit 19 and the discharging conduit 16 to a second supply conduit 20, and in a second operating position B, shown in Figure 1, connects the delivery conduit 14 to the second supply conduit 20 and the discharging conduit 16 to the first supply conduit 19.

Each first chamber 9 is connected by a further first supply conduit 21 to the first supply conduit 19.

Each second chamber 10 is connected by a further second supply conduit 22 to the second supply conduit 20.

Between the control means 17 and the first supply line 19 is interposed sequence valve means 23 of known type and substantially comprising a check or nonreturn valve 24 and a maximum pressure valve 25 that are mounted parallel.

The check valve 24 is configured for enabling the fluid to flow towards the lifting means 3 but not in an opposite direction.

The one-way maximum pressure valve 25 is configured to enable the fluid to flow only in the direction of the control means 17 when the pressure of said fluid in the first supply conduit 19 is greater than a predetermined fixed value, which is properly selected.

The maximum pressure valve 25 is further adjustable, for example by means of elastic calibrating elements, to enable said fixed value of the pressure of the fluid to be varied.

On each further first conduit 21 is furthermore installed a further check valve 26 piloted by a pressurised signal derived by a piloting conduit 27 from the corresponding further second conduit 22.

Each further piloted check valve 26 enables the fluid to flow freely to the corresponding double-acting hydraulic cylinder 3, but allows the passage of the fluid in an opposite direction only if the pressurised signal is greater than a further predetermined value.

When it is desired to tilt the cab of the vehicle, in a lifting step, the pump 12 is switched on and the control means 17 is taken to the first operating position, in which the delivery conduit 14 is flowingly connected to the first supply conduit 19. In this way a flow of pressurised fluid is developed through the first supply conduits 19, 21, the flow neither being obstructed by the sequence valve 23 nor by the further check valves 26, this enabling the pressure inside the first chambers 9-to be increased.

The piston 5 is thus pushed so as to make the stem 6 protrude from the cylinder and thus enable the cab to be tilted.

The operating fluid initially contained in each second chamber 10 flows, through the second conduits 20, 22 towards the tank 13.

When the pump 12 is switched off, the weight of the cab can return the cab to the operating position in which the vehicle can be used. This may jeopardise the safety of an operator engaged in maintenance operations on the vehicle, for example in a zone below the cab.

In order to avoid this, the check valve 24 and the sequence valve 23 are arranged for preventing the operating fluid to flow towards the tank 13, so as to lock the cab in an tilted position.

When it is desired to return the cab of the vehicle, in a descent step, to the operating position, the pump 12 is switched on and the control means 17 is taken to the second operating position B shown in Figure 1.

In this manner the delivery conduit 14 is connected to the second conduits 20, 22 and the pressure inside the second chambers 10 increases. Initially, the further check valves 26 and the sequence valve 23 are closed.

When the pressure in the second conduits 22 is sufficient to cause the opening of the further check valves 26, the first chambers 9 are connected to the first supply conduit 19. The pressure of the first chambers 9 is thus, after the opening of the further check valves 26, equal to the pressure of the first supply conduit 19.

The pressure in each first chamber 9 depends, until the sequence valve 23 is closed, on the pressure of the corresponding second chamber 10.

The pressure of the second chambers 10 is substantially the same as the pressure of the second supply conduits and is thus substantially the same for all the second chambers 10.

A motive power, determined by the pressure in the second chamber 10 and a resistant force, determined by the pressure in the first chamber 9 act on each piston 5.

The resistant force and the motive power that act on each piston 5 are substantially the same and contrary until the sequence valve 23 is closed. A resulting force, equal to the sum of the resistant force and the motive power, acting on each piston is thus nil.

The pump 12 increases the pressure of the second chambers 10 and consequently also increases the pressure of the first chambers 9.

When the pressure in the first chambers 9 reaches the desired pressure value, the sequence valve 23, i.e. the maximum pressure valve 25, opens to enable the operating fluid to pass through.

A sudden decrease of the pressure of the fluid in the first chambers 9 and in the first conduits 19, 21 thus occurs.

Consequently, the resistant force acting on the piston 5 decreases noticeably.

The pressure of the fluid in the first conduits 19, 21 may fall, nevertheless the pressure of the fluid remains above said fixed pressure, so as to maintain the sequence valve 23 open. The fall of the pressure of the fluid in the first supply conduit 19 can nevertheless cause the sequence valve 23 to close. If this occurs, after a short period of time the pressure inside the first chambers 9 and the first supply conduit 19 returns to the predetermined pressure value and the sequence valve 23 opens again.

During the descent step of the cab, therefore, the sequence valve 23, or rather the maximum pressure valve 25, opens and closes repeatedly in short time intervals. When the maximum pressure valve 25 is open the resulting force assumes very great values inasmuch as the pressure in each second chamber 10 is much greater than the pressure of the corresponding first chamber 9.

Each piston 5, under the effect of the corresponding resulting force, moves with a corresponding sliding speed inside the corresponding cylinder 4.

The resulting force that pushes each piston 5 is substantially the same for each cylinder 4, inasmuch as a pressure difference between the first chamber 9 and the second chamber 10 of each cylinder 4 is substantially the same.

The sliding speed of each piston 5 furthermore depends on possible undesired resistant forces that act on the double-acting cylinders 3, causing different sliding for each piston 5 inside the corresponding cylinder 4.

The resistant forces may depend, for example, on dissipative phenomena such as friction and resistances in rotating hinges by means of which the cab is connected to the frame of the vehicle, by slight misalignments of such hinges or by unbalanced weight distribution of the cab with respect to the cylinders.

By fixing that the predetermined pressure value of the maximum pressure valve 25 is very high, resulting forces can be obtained that are of an intensity that is much greater than that of possible resistant forces. In this manner, even if each piston 5 is subject to different sliding resistance, the sliding speed of the pistons 5 is not significantly influenced by the resistant forces and during the descent of the cab progressive misalignments of the cylinders 3 and consequent deformations of the cab do not occur.

Such deformations are undesired both for structural reasons and because they may prevent a correct return of the cab to a lowered configuration in which the vehicle can be used, for example causing locking of the cab in intermediate positions.

## Claims

1. Apparatus for lifting a load, in particular a cab of a vehicle, comprising a double-acting cylinder means (3), provided with piston means (5) connected to said load and defining first chamber means (9) and second chamber means (10) flowingly connected to supply means (11) or to tank means (13) of a fluid respectively by first conduit means (19, 21) and second conduit means (20, 22), control valve means (17) for connecting said supply means (11) of said pressurised fluid selectively to said first chamber means (9) or to said second chamber means (10) respectively for lifting or lowering said load, **characterised in that** it comprises sequence valve means (23) mounted on said first conduit means (19, 21) between said control valve means (17) and said double-acting cylinder means (3) and configured so as to enable said fluid to flows towards said control valve means (17) when a fixed pressure of said fluid in said first conduit means (19, 21) is reached.

2. Apparatus according to claim 1, wherein said sequence valve means (23) comprises maximum pressure valve means (25) that enables said fluid to flow towards said control valve means (17) when said fixed pressure is reached, and check valve means (24), mounted parallel to said maximum pressure valve means (25), and arranged for closing the passage of said fluid towards said control valve means (17).

3. Apparatus according to claim 3, wherein said maximum pressure valve means (25) is adjustable for adjusting said fixed pressure of said fluid.

4. Apparatus according to any preceding claim, wherein said double-acting cylinder means (3) comprises a plurality of double-acting cylinders acting on said load.

5. Apparatus according to any preceding claim, and furthermore comprising further check valve means (26, 27), arranged on said first conduit means (19, 21) between said double-acting cylinder means (3) and said sequence valve means (23) and configured so as to enable a further passage of said fluid from said first chamber means (9) to said first conduit means (19, 21) in the presence of a pressurised piloting signal derived from said second conduit means (20, 22).

6. Apparatus according to claim 5, wherein said further check valve means comprises a piloted check valve (26), said pressurised piloting signal being derived by a corresponding piloting conduit (27).

7. Apparatus according to any preceding claim, wherein said supply means (11) comprises a pump (12) flowingly connected to said tank means (13) of said fluid to pump said fluid through a delivery conduit (14) towards said control valve means (17).

8. Apparatus according to claim 7, comprising a discharging conduit (16) connected to said control valve means (17) to discharge said fluid into said tank means (13).

9. Apparatus according to claim 8, wherein said control valve means (17) comprises a two-position two-way control valve, which is movable between a first position, wherein said delivery conduit (14) is flowingly connected to said first conduit means (19, 21) and said discharging conduit (16) is flowingly connected to said second conduit means (20,22), and a second position (B), wherein said delivery conduit (14) is flowingly connected to said second conduit means (20, 22) and said discharging conduit (16) is flowingly connected to said first conduit means (19, 21).
